# FASCICULE DE BREVET EUROPEEN

(11) **EP 1 179 470 B1**
(45) Date de publication et mention de la délivrance du brevet: **28.01.2004**
(21) Numéro de dépôt: 01402057.2
(22) Date de dépôt: 30.07.2001
(51) Int. Cl.: B62D 1/16

(54) **Ensemble de commande pour haut de colonne de direction de vehicule automobile comprenant des moyens de fixation perfectionnes**
Bedieneinrichtung für den oberen Kraftfahrzeuglenksäulenbereich mit verbesserten Befestigungsmitteln
Control unit for the upper part of a motor vehicle steering column with improved fixation means

(30) Priorité: 31.07.2000 FR 0010055
(43) Date de publication de la demande: 13.02.2002
(73) Titulaire: SC2N, 78180 Montigny-le-Bretonneux (FR)
(72) Inventeur: Hallet, Michel, 14320 Clinchamps/Orne (FR); Van de Kamer, Teddy, 14000 Caen (FR)
(74) Mandataire: Martin, Jean-Jacques

(56) Documents cités:
- EP-A- 1 006 038

## Description

La présente invention concerne le domaine des hauts de colonne de direction de véhicule automobile.

Plus précisément, la présente invention concerne des moyens de fixation de tels ensembles.

De nombreux ensembles de commande pour haut de colonne de direction de véhicule automobile et de nombreux moyens de fixation pour ceux-ci ont été proposés.

En particulier, on a proposé de nombreux moyens de fixation d'ensembles de hauts de colonne de direction de véhicule automobile à base de systèmes de vissage associés à des moyens autorisant un réglage angulaire.

Cependant, les dispositifs jusqu'ici proposés ne donnent pas totalement satisfaction, notamment en raison de leur complexité.

La présente invention a pour but de proposer de nouveaux moyens de fixation.

La présente invention a pour but en particulier de proposer des moyens de fixation de structure simple, permettant un montage aisé et automatisable sur véhicule.

Ce but est atteint dans le cadre de la présente invention grâce à un dispositif de fixation pour ensemble de commande pour haut de colonne de direction de véhicule automobile comprenant un ressort de torsion monté sur l'un des éléments que constituent l'ensemble et la colonne et ledit ressort comportant une branche en saillie apte à venir en prise avec une denture de verrouillage prévue sur l'autre desdits éléments.

Selon une autre caractéristique avantageuse de l'invention, l'enroulement du ressort a son axe perpendiculaire à l'axe de la colonne de direction.

Selon encore une autre caractéristique avantageuse de l'invention, le ressort comporte deux enroulements reliés entre eux par ladite branche en saillie formant une épingle médiane en U.

Selon une autre caractéristique avantageuse de la présente invention, le ressort est monté sur l'ensemble de commande tandis que la rampe de verrouillage est prévue sur le haut de la colonne de direction.

La présente invention concerne également les ensembles de commande pour haut de colonne de direction ainsi équipés.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue schématique en coupe axiale d'un dispositif conforme à la présente invention, en position de repos, avant assemblage de l'ensemble de commande sur le haut de la colonne de direction,

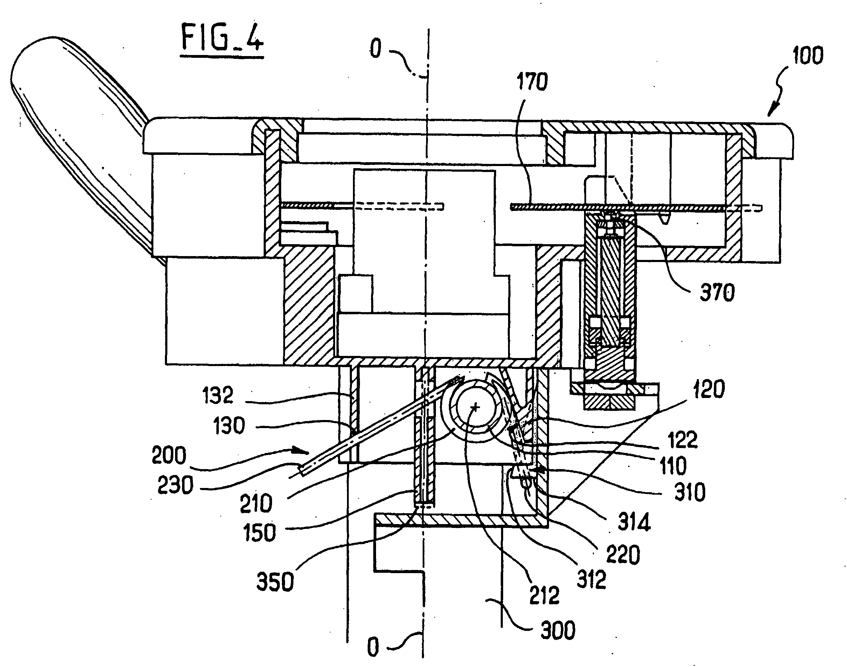

- les figures 2, 3 et 4 représentent des vues similaires du même dispositif au cours de trois étapes successives d'assemblage,

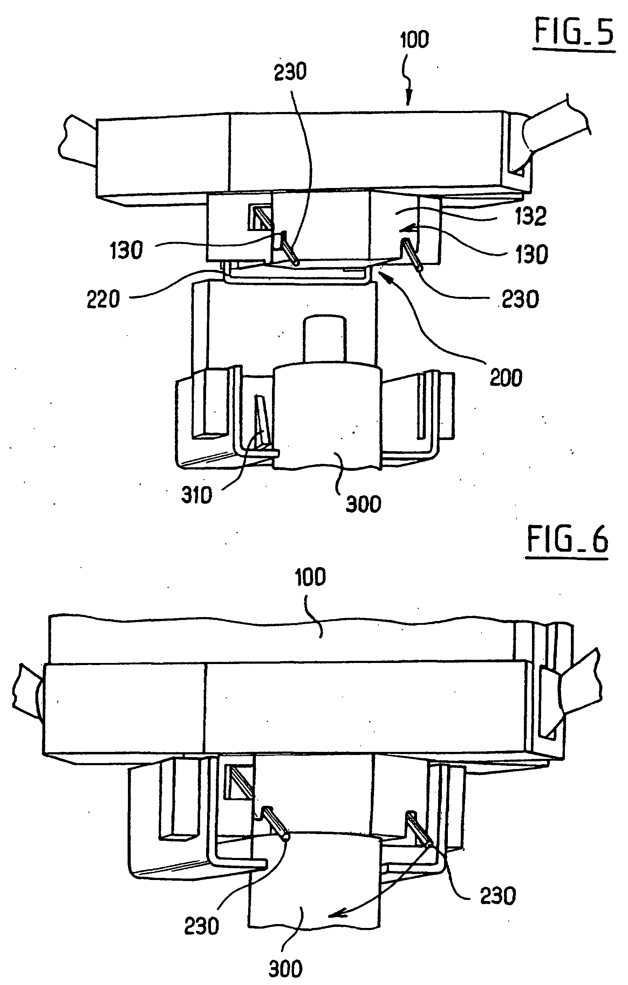

- la figure 5 représente une vue en perspective du même dispositif avant assemblage,
- la figure 6 représente une vue en perspective du dispositif après assemblage, et

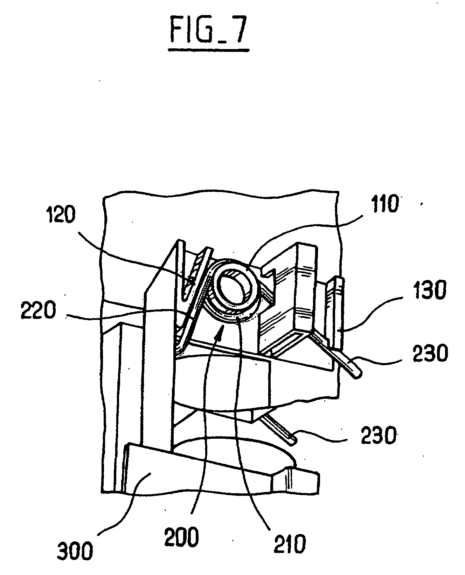

- la figure 7 représente une autre vue en perspective du dispositif, avant assemblage, illustrant en particulier le ressort de torsion.

Le système illustré sur les figures annexées, destiné à constituer le haut d'une colonne de direction de véhicule automobile comprend un ensemble de commande 100 équipé d'un ressort de torsion 200 et une colonne de direction 300 équipée d'une interface 310 munie de moyens de verrouillage.

L'ensemble de commande 100 et le haut de colonne 300 peuvent faire l'objet de nombreuses variantes de réalisation. L'illustration de ces moyens donnée sur les figures annexées ne doit donc pas être considérée comme limitative.

Le ressort 200 de torsion comprend deux enroulements coaxiaux 210 reliés entre eux par une épingle médiane 220 en forme de U et en saillie dans une direction générale radiale par rapport à l'axe des enroulements, tangentiellement à ceux-ci. Les deux enroulements 210 se terminent par des branches d'extrémité 230 de préférence rectilignes, également en saillie dans une direction générale radiale par rapport à l'axe des enroulements, tangentiellement à ceux-ci.

Les deux enroulements 210 sont supportés avec leur axe 212 perpendiculaire à l'axe O-O de la colonne de direction par deux fûts 110 de diamètre complémentaire venus de matière sur l'ensemble 100.

Les deux branches d'extrémité 230 sont adaptées pour venir en prise sur des butées de verrouillage complémentaires 130 prévues sur l'ensemble 100. L'épingle 220 quant à elle coopère avec une butée de précontrainte 120 prévue sur l'ensemble 100 et est conçue par ailleurs pour venir en prise avec les moyens de verrouillage 310 prévus sur la colonne de direction.

Les butées de verrouillage 130 et la butée de précontrainte 120 sont prévues respectivement de part et d'autre du fût 110 assurant le support du ressort 200.

De préférence, les butées de verrouillage 130 sont formées de deux crans concaves formés sur le sommet d'une palette 132 venue de matière sur l'ensemble 100 sensiblement parallèlement à l'axe O-O. Les deux crans formant butée de verrouillage 130 sont ouverts en direction du bas de la colonne de direction. La butée de précontrainte 120 est quant à elle formée d'un muret sensiblement parallèle à l'axe O-O venu de matière sur l'ensemble 100. Cependant, on notera que le muret 120 possède de préférence une surface 122 tangentielle aux enroulements du ressort et inclinée par rapport à l'axe O-O, sur laquelle repose l'épingle 220.

La position de l'épingle médiane 220 et des branches d'extrémité 230 sur les enroulements 210 est telle que lorsque les branches d'extrémité 230 sont placées dans les crans concaves formant butée de verrouillage 130, la branche médiane 220 repose sur la butée 120 et le ressort est placé en précontrainte contrôlée.

Par contre, lorsque les branches d'extrémité 230 sont retirées des crans concaves formant butée de verrouillage 130 et placées librement contre les flancs de la palette 132, le ressort 200 est libéré.

L'interface de verrouillage 310 prévu sur la colonne de direction 300 est constituée essentiellement d'une dent de verrouillage. Celle-ci peut faire l'objet de nombreuses variantes de réalisation.

De préférence, cette dent de verrouillage comporte une rampe 312 en regard de l'épingle 220, qui se rapproche progressivement de l'axe O-O en direction du bas de colonne de direction. Cette rampe 312 débouche sur une face de verrouillage 314 globalement perpendiculaire à l'axe O-O.

En outre, il est prévu de préférence des moyens de centrage relatifs et de positionnement entre l'ensemble 100 et la colonne de direction 300. Ces moyens de centrage sont formés de préférence de structures à complément de forme orientées parallèlement à la direction d'engagement relatif de l'ensemble 100 sur la colonne de direction 300, soit parallèlement à l'axe O-O selon le mode de réalisation particulier illustré sur les figures annexées.

Plus précisément encore selon le mode de réalisation particulier représenté sur les figures annexées, ces moyens de centrage comprennent une nervure axiale 150 parallèle à l'axe O-O et solidaire de la face inférieure de l'ensemble 100, adaptée pour pénétrer dans une fente complémentaire 350 formée sur le haut de la colonne 300.

Bien entendu, la disposition inverse est possible en ce sens que l'on peut prévoir un élément en saillie sur le haut de la colonne 300 adapté pour pénétrer dans une fente complémentaire solidaire de l'ensemble 100.

Pour utiliser le dispositif de fixation qui vient d'être décrit, on procède essentiellement comme suit.

Le ressort 200 est positionné sur l'ensemble 100, son épingle médiane 220 reposant sur la butée de précontrainte 120 et ses branches d'extrémité 230 étant placées en prise sur les butées de verrouillage 130.

L'ensemble 100 est alors présenté en regard du haut de colonne 300, l'ensemble 100 étant précentré sur le haut de colonne 300 grâce à l'engagement de la nervure 150 dans la fente complémentaire 350.

Bien entendu le cas échéant cette nervure 150 et la fente 350 complémentaire peut être dédoublée ou multipliée sous forme de plusieurs segments séparés.

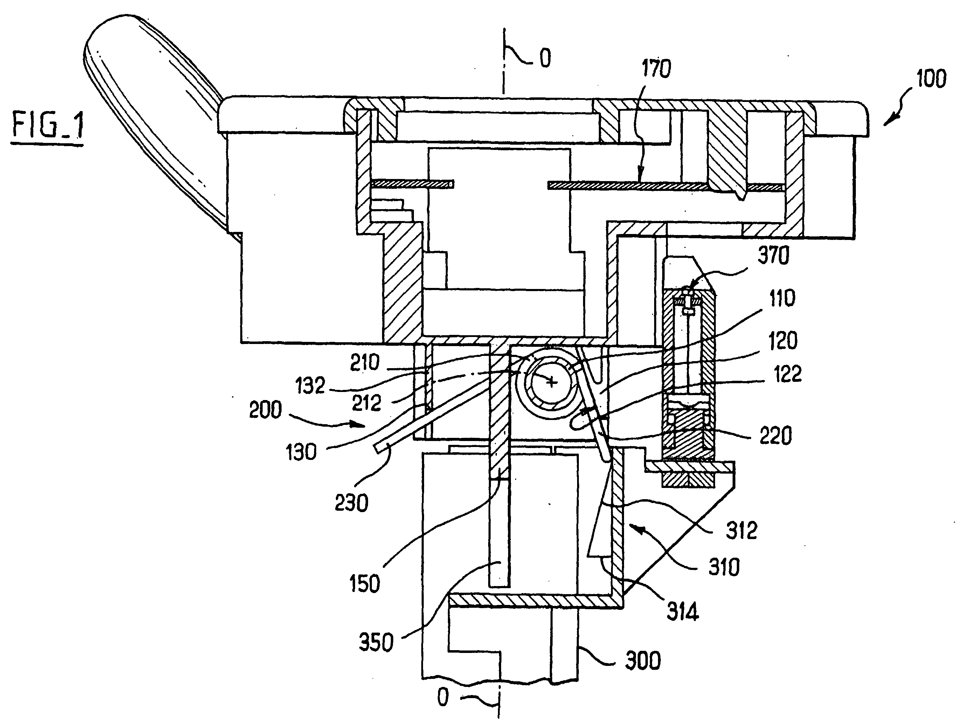

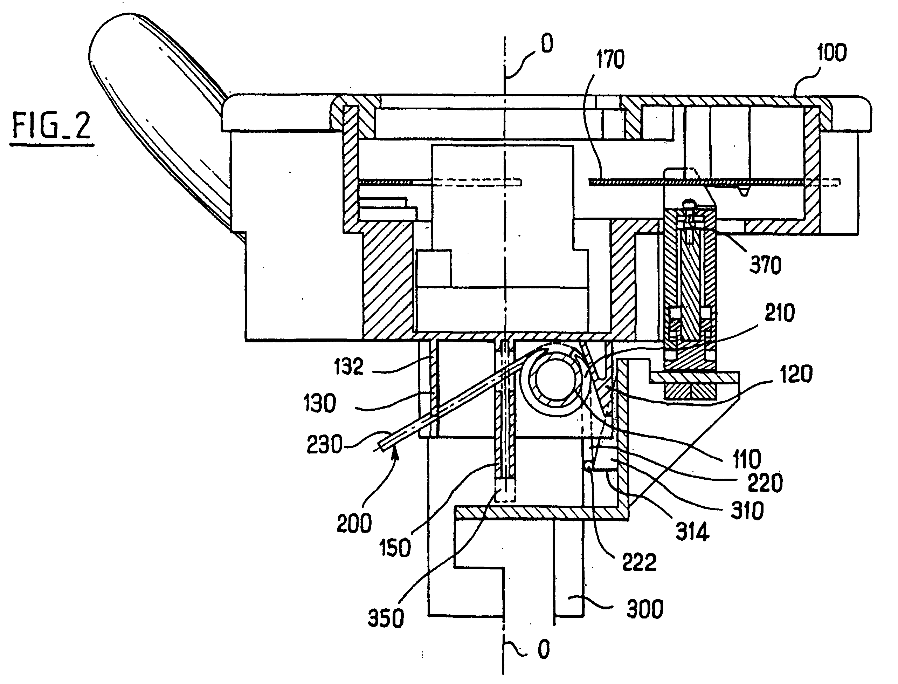

II suffit alors de déplacer l'ensemble 100 à translation parallèlement à l'axe O-O en rapprochement du haut de colonne 300. Au cours de cette opération, comme on le voit à l'examen comparé des figures 1 et 2, l'épingle médiane 220 glisse sur la rampe 312. Là encore, bien entendu, la rampe 312 peut être dédoublée ou multipliée sous forme de segments multiples propres à guider correctement l'épingle 220 sans pour autant couvrir la totalité de la longueur du sommet de celle-ci.

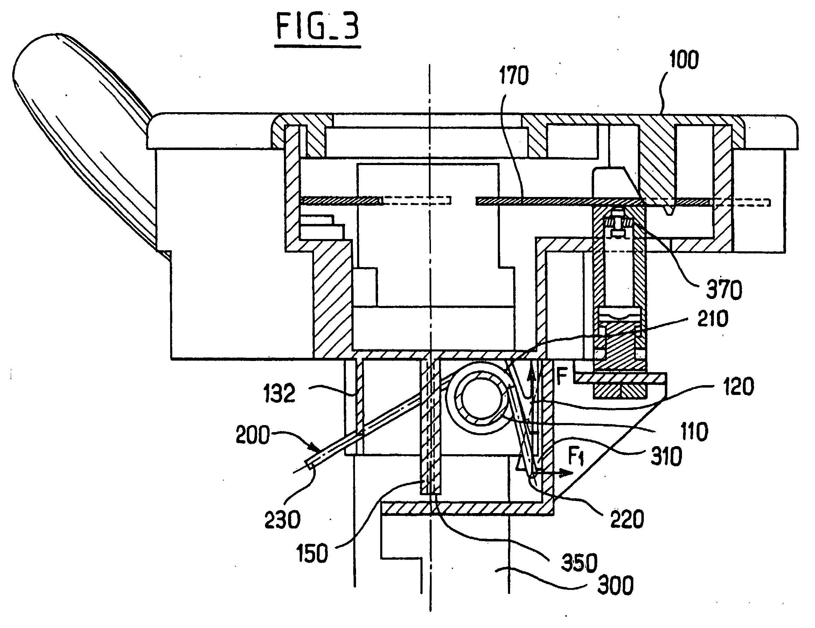

En fin de montage comme on le voit sur la figure 3, le sommet de l'épingle 220 échappe à la rampe 312 et prend position contre la face de verrouillage 314.

L'assemblage est alors achevé.

Pour déverrouiller l'ensemble 100, il suffit d'agir sur les extrémités des branches 230 pour sortir celles-ci des crans de verrouillage 130. Le pivotement des branches 230 du ressort 200 ainsi libéré bascule alors l'épingle 220 hors de portée de la face de verrouillage 314.

L'homme de l'art comprendra que le dispositif qui vient d'être décrit permet un montage facilement automatisable, automatique, sans outils, rapide, sans réglage, et aisément démontable.

Il faut noter par ailleurs que la contrainte exercée par le ressort 200 sur l'interface 310 du haut de colonne génère deux efforts F et F1 schématisés sur la figure 3 : l'effort F orienté parallèlement à l'axe O-O en direction de l'ensemble 100 génère une contrainte entre l'ensemble 100 et le haut de colonne 300 tendant à plaquer l'ensemble 100 contre le haut de la colonne 300 ; l'effort F1 est orienté perpendiculairement à l'axe O-O et radialement vers l'extérieur de celui-ci et tend à plaquer la ou les nervures 150 contre une face des fentes complémentaires 350. Ainsi, la contrainte appliquée par le ressort 200 permet d'obtenir un référentiel sans aucun jeu angulaire.

On notera également que dans le cadre de la présente invention, le dispositif qui vient d'être décrit permet une connexion électrique automatique entre des contacts électriques 370 prévus sur le haut de la colonne de direction 300 et des contacts électriques complémentaires prévus par exemple sur un circuit imprimé 170 porté par l'ensemble 100, ou tous moyens équivalents.

Dans ce cas, l'effort F appliqué par le ressort 200 doit être supérieur à la précontrainte élastique des contacts 370 et/ou de contacts complémentaires prévus sur l'ensemble 100 pour assurer une connexion électrique fiable.

Selon le mode de réalisation qui vient d'être décrit, le ressort 200 est solidaire de l'ensemble amovible 100 tandis que l'interface 310 est prévue sur le haut de la colonne de direction 300.

Cependant, la disposition inverse est possible, c'est-à-dire que l'on peut prévoir le ressort 200 équipé de son épingle de verrouillage 220 sur le haut de la colonne de direction, et l'interface complémentaire 310 sur l'ensemble amovible 100.

Bien entendu, la présente invention n'est pas limitée au mode de réalisation particulier qui vient d'être décrit mais s'étend à toute variante conforme à son esprit.

En particulier, la présente invention peut s'appliquer à la fixation de tout ensemble de commande pour haut de colonne de direction de véhicule automobile, notamment mais non exclusivement un ensemble comportant des moyens de commutation électrique. La présente invention permet en particulier un parfait positionnement, centrage, blocage en rotation de l'ensemble de commande en générant simultanément une contrainte suivant l'axe de la colonne permettant de compenser tout jeu éventuel ainsi que le cas échéant l'effort antagoniste d'une connexion électrique, tout en conservant un bon alignement à l'engagement.

La contrainte suivant l'axe de la colonne précité est due au fait que en position d'engagement, l'épingle 220 n'est pas rigoureusement parallèle à l'axe O-O mais inclinée par rapport à celui-ci, en s'écartant de l'axe O-O en direction du sommet 222 de l'épingle 220, puisqu'elle repose sur la surface 122.

Typiquement, selon le mode de réalisation préférentiel illustré sur les figures annexées, en position d'assemblage l'épingle 220 est ainsi inclinée d'environ 20° par rapport à l'axe O-O, comme la face 122.

## Revendications

1. Dispositif de fixation pour ensemble de commande pour haut de colonne de direction de véhicule automobile comprenant un ressort de torsion (200) monté sur l'un des éléments (100 ; 300) que constituent l'ensemble (100) et la colonne (300) et ledit ressort comportant une branche (220) en saillie apte à venir en prise avec une denture de verrouillage (310) prévue sur l'autre desdits éléments (300 ; 100).

2. Dispositif selon la revendication 1, **caractérisé par le fait que** le ressort de torsion (200) possède au moins un enroulement (210) dont l'axe (212) est perpendiculaire à l'axe O-O de la colonne de direction.

3. Dispositif selon l'une des revendications 1 ou 2, **caractérisé par le fait que** le ressort de torsion (200) possède deux enroulements coaxiaux (210) reliés entre eux par la branche en saillie (220) formée d'une épingle médiane en U.

4. Dispositif selon l'une des revendications 1 à 3, **caractérisé par le fait que** les extrémités (230) de l'enroulement (210) du ressort de torsion sont formées de branches généralement rectilignes en saillie dans une direction générale radiale par rapport à l'axe (212) de l'enroulement.

5. Dispositif de fixation selon l'une des revendications 1 à 4, **caractérisé par le fait qu'**il comprend deux crans concaves formant butée de verrouillage (130) adaptés pour recevoir les extrémités (230) de l'enroulement du ressort de torsion (200).

6. Dispositif selon l'une des revendications 1 à 5, **caractérisé par le fait qu'**il comprend une butée de précontrainte (120) apte à servir d'appui à la branche en saillie (220) du ressort de torsion.

7. Dispositif selon l'une des revendications 1 à 6, **caractérisé par le fait que** la denture de verrouillage (310) comprend une rampe (312) inclinée par rapport à l'axe de la colonne de direction et une face de verrouillage (314) orthogonale à cet axe.

8. Dispositif selon l'une des revendications 1 à 7, **caractérisé par le fait qu'**il comprend des moyens de centrage relatif entre l'ensemble (100) et la colonne de direction (300) formés de structures à complément de forme (150, 350).

9. Dispositif selon l'une des revendications 1 à 8, **caractérisé par le fait qu'**en position d'assemblage, la branche en saillie (220) du ressort de torsion est inclinée par rapport à l'axe O-O.

10. Dispositif selon la revendication 9, **caractérisé par le fait qu'**en position d'assemblage, la branche en saillie (220) du ressort de torsion est inclinée d'environ 20° par rapport à l'axe O-O.

11. Dispositif de fixation selon l'une des revendications 1 à 10, **caractérisé par le fait que** l'ensemble (100) et le haut de colonne (300) possèdent des contacts électriques complémentaires portés en prise lors de l'assemblage.

12. Dispositif selon la revendication 11, **caractérisé par le fait que** l'ensemble (100) porte des contacts électriques sur un circuit imprimé (170).

13. Dispositif selon l'une des revendications 11 et 12, **caractérisé par le fait que** certains au moins des contacts électriques sont placés sous contrainte élastique et que le ressort de torsion (200) génère sur ceux-ci, après assemblage, un effort supérieur à cette contrainte.

14. Dispositif selon l'une des revendications 1 à 13, **caractérisé par le fait que** le ressort de torsion est monté sur l'ensemble de commande (100) tandis que la denture de verrouillage (310) est prévue sur le haut de la colonne de direction.

15. Ensemble de commande pour haut de colonne de direction de véhicule automobile comportant un dispositif de fixation conforme à l'une des revendications 1 à 14, ledit ensemble portant un ressort de torsion (200) comportant une branche en saillie (220) apte à venir en prise avec une denture de verrouillage (310) prévue sur le haut d'une colonne de direction (300).

## Claims

1. Fixing device for a control unit for the upper part of a motor vehicle steering column, comprising a torsion spring (200) mounted on one of the elements (100; 300) that the unit (100) and the column (300) constitute and the said spring comprising a projecting branch (220) able to engage with locking a tooth (310) provided on the other of the said elements (300; 100).

2. Device according to Claim 1, **characterized in that** the torsion spring (200) has at least one winding (210) the axis (212) of which is perpendicular to the axis O-O of the steering column.

3. Device according to one of Claims 1 and 2, **characterized in that** the torsion spring (200) has two coaxial windings (210) connected together by the projecting branch (220) formed of a central U-shaped hairpin.

4. Device according to one of Claims 1 to 3, **characterized in that** the ends (230) of the winding (210) of the torsion spring are formed of generally straight branches projecting in a generally radial direction with respect to the axis (212) of the winding.

5. Fixing device according to one of Claims 1 to 4, **characterized in that** it comprises two concave notches forming locking stops (130) designed to accommodate the ends (230) of the winding of the torsion spring (200).

6. Device according to one of Claims 1 to 5, **characterized in that** it comprises a preloading stop (120) able to take the pressure of the projecting branch (220) of the torsion spring.

7. Device according to one of Claims 1 to 6, **characterized in that** the locking teeth (310) comprise a ramp (312) inclined with respect to the axis of the steering column and a locking face (314) orthogonal to this axis.

8. Device according to one of Claims 1 to 7, **characterized in that** it comprises means for the relative centring of the unit (100) with respect to the steering column (300), which means are formed of structures with complementing shapes (150, 350).

9. Device according to one of Claims 1 to 8, **characterized in that**, in the assembled position, the projecting branch (220) of the torsion spring is inclined with respect to the axis O-O.

10. Device according to Claim 9, **characterized in that** in the assembled position, the projecting branch (220) of the torsion spring is inclined by about 20° with respect to the axis O-O.

11. Fixing device according to one of Claims 1 to 10, **characterized in that** the unit (100) and the upper part of the steering column (300) have complementing electric contacts brought into engagement at the time of assembly.

12. Device according to Claim 11, **characterized in that** the unit (100) bears electric contacts on a printed circuit (170).

13. Device according to one of Claims 11 and 12, **characterized in that** at least some of the electric contacts are placed under elastic stress and **in that** the torsion spring (200) generates on them, after assembly, a load greater than this stress.

14. Device according to one of Claims 1 to 13, **characterized in that** the torsion spring is mounted on the control unit (100) while the locking teeth (310) are provided on the upper part of the steering column.

15. Control unit for the upper part of a motor vehicle steering column comprising a fixing device according to one of Claims 1 to 14, the said unit bearing a torsion spring (200) comprising a projecting branch (220) able to engage with locking teeth (310) provided on the upper part of a steering column (300).

## Patentansprüche

1. Vorrichtung zur Befestigung einer Bedieneinheit für den oberen Teil einer Kraftfahrzeuglenksäule, die eine Torsionsfeder (200) umfaßt, die auf einem der Elemente (100,300), die von der Einheit (100) und der Lenksäule (300) gebildet werden, montiert ist, wobei die Feder einen vorstehenden Arm (220) umfaßt, der geeignet ist mit einer Blockierzahnung (310) in Eingriff zu kommen, die auf dem anderen der Elemente (300, 100) vorgesehen ist.

2. Vorrichtung nach Anspruch 1, **dadurch gekennzeichnet, daß** die Torsionsfeder (200) wenigstens eine Wicklung (210) umfaßt, deren Achse (212) rechtwinklig zur Achse O-O der Lenksäule ist.

3. Vorrichtung nach einem der Ansprüche 1 oder 2, **dadurch gekennzeichnet, daß** die Torsionsfeder (200) zwei koaxiale Wicklungen (210) besitzt, die untereinander durch den vorstehenden Arm (220) verbunden sind, der durch eine mittlere U-förmige Nadel gebildet wird.

4. Vorrichtung nach einem der Ansprüche 1 bis 3, **dadurch gekennzeichnet, daß** die Enden (230) der Wicklung (210) der Torsionsfeder durch im wesentlichen geradlinige Arme gebildet werden, die in eine im wesentlichen radiale Richtung in Bezug auf die Wicklungsachse (212) hervorstehen.

5. Vorrichtung nach einem der Ansprüche 1 bis 4, **dadurch gekennzeichnet, daß** sie zwei konkave Kerben umfaßt, die einen Blockieranschlag (130) bilden, der zur Aufnahme der Wicklungsenden (230) der Torsionsfeder (200) ausgebildet ist.

6. Vorrichtung nach einem der Ansprüche 1 bis 5, **dadurch gekennzeichnet, daß** sie einen Vorspannanschlag (120) umfaßt, der geeignet ist als Abstützung für den vorstehenden Arm (220) der Torsionsfeder zu dienen.

7. Vorrichtung nach einem der Ansprüche 1 bis 6, **dadurch gekennzeichnet, daß** die Blockierzahnung (310) eine Rampe (312), die schräg zur Achse der Lenksäule verläuft, und eine zu dieser Achse rechtwinklige Blockierfläche (314) umfaßt.

8. Vorrichtung nach einem der Ansprüche 1 bis 7, **dadurch gekennzeichnet, daß** sie Mittel zur relativen Zentrierung der Einheit (100) und der Lenksäule (300) umfaßt, die durch sich in der Form ergänzende Strukturen (150, 350) gebildet werden.

9. Vorrichtung nach einem der Ansprüche 1 bis 8, **dadurch gekennzeichnet, daß** der vorstehende Arm (220) der Torsionsfeder in der Position des Zusammenbaus gegenüber der Achse O-O geneigt ist.

10. Vorrichtung nach Anspruch 9, **dadurch gekennzeichnet, daß** der vorstehende Arm (220) der Torsionsfeder in der Position des Zusammenbaus gegenüber der Achse O-O um etwa 20° geneigt ist.

11. Vorrichtung nach einem der Ansprüche 1 bis 10, **dadurch gekennzeichnet, daß** die Einheit (100) und der obere Teil der Lenksäule (300) sich ergänzende elektrische Kontakte aufweisen, die beim Zusammenbau in Eingriff gebracht werden.

12. Vorrichtung nach Anspruch 11, **dadurch gekennzeichnet, daß** die Einheit (100) auf einer gedruckten Schaltung (170) elektrische Kontakte trägt.

13. Vorrichtung nach einem der Ansprüche 11 und 12, **dadurch gekennzeichnet, daß** wenigstens bestimmte der elektrischen Kontakte unter elastischer Spannung stehen und, daß die Torsionsfeder (200) auf diese nach dem Zusammenbau eine Kraft ausübt, die größer als diese Spannung ist.

14. Vorrichtung nach einem der Ansprüche 1 bis 13, **dadurch gekennzeichnet, daß** die Torsionsfeder auf der Bedieneinheit (100) montiert ist, während die Blockierzahnung (310) auf dem oberen Teil der Lenksäule vorgesehen ist.

15. Bedieneinheit für den oberen Teil einer Kraftfahrzeuglenksäule, die eine Befestigungsvorrichtung entsprechend einem der Ansprüche 1 bis 14 umfaßt, wobei die Einheit eine Torsionsfeder (200) trägt, die einen vorstehenden Arm (220) umfaßt, der geeignet ist mit einer auf dem oberen Teil einer Lenksäule (300) vorgesehenen Blockierzahnung (310) in Eingriff zu kommen.
